# EUROPÄISCHE PATENTANMELDUNG

(11) **EP 2 335 482 A2**
(43) Veröffentlichungstag der Anmeldung: **22.06.2011**
(21) Anmeldenummer: 10014806.3
(22) Anmeldetag: 20.11.2010
(51) Int. Cl.: A01N 63/00, A01P 1/00

(54) **Verfahren zum Reduzieren von pathogenen Bakterien in einem Stall für Nutztiere**

(30) Priorität: 25.11.2009 DE 102009057023
(71) Anmelder: Inter-Harz GmbH, 25365 Klein Offenseth-Sparrieshoop (DE)
(72) Erfinder: Brandt, Lothar, 25785 Odderade (DE)
(74) Vertreter: Hauck Patent- und Rechtsanwälte

(57) **Zusammenfassung**

Verfahren zum Reduzieren von pathogenen Bakterien in einem Stall für Nutztiere, gekennzeichnet durch Ausbringung einer Mischung von Bakterien der Stämme Bacillus subtilis, Bacillus licheniformis und Bacillus pumilus in dem Stall.

## Beschreibung

Die vorliegende Erfindung betrifft ein Verfahren zum Reduzieren von pathogenen Bakterien in einem Stall für Nutztiere.

Bis heute werden pathogene, sowie schadgasproduzierende Bakterien bei der Haltung von Nutztieren durch die Verabreichung von Antibiotika an die Tiere und/oder die Ausbringung von Desinfektionsmitteln im Stall abgetötet und somit deren Verbreitung behindert. Bei diesem Vorgang werden auch die probiotischen Bakterien im Stall abgetötet. Die Nahrungsgrundlage für Bakterien bleibt erhalten, so dass eine Neubesiedlung mit schädlichen Keimen und Bakterien sofort nach Rückgang der Wirksamkeit des Desinfektionsmittels einsetzt.

Aus DE 101 10 431 A1 ist ein bacteriocinhaltiges Sorbinsäurepräparat als Futtermittelzusatz in der Nutztieraufzucht bekannt. Das Präparat enthält 90 bis 99,9 Gew.-% Sorbinsäure und enthält zusätzlich ein Bacteriocin oder Bacteriocine, in einer Konzentration von 2,5 - 50 mg/kg.

Aus US 5,733,355 ist ein Futtermittelzusatz bekannt, der lipopeptiderzeugende Bakterien enthält, um eine bakterielle Bodenverbesserung zu erzielen, eine deodorierende Wirkung für den Kot und Urin der Tiere zu erzeugen und die Nahrungsaufnahme der Tiere zu verbessern.

Aus US 6,051,219 ist eine neue Züchtung des Bacillus subtilis bekannt, die als Bacillus subtilis Kubota bezeichnet wird. Der Bacillus subitilis Kubota wird als Futtermittelzusatz bei der Nutztieraufzucht verwendet. Ferner ist bekannt, dass der Bacillus subtilis Kubota, direkt auf Kot und Urin der Tiere versprüht, eine deodorierende Wirkung besitzt.

Aus DE 39 18 306 ist ein bakterienhaltiges Deodorant zur Verminderung der Geruchsbelästigung von Tierkot bekannt. Die Hauptbestandteile sind Buttersäurebakterien und Bakterien der Gattung Bacillus subtilis.

Aus WO 2009/126473 A1 ist eine landwirtschaftlich verwertbare Sporen enthaltende Formulierung bekannt, die ein oder mehrere der folgenden Bakterien der Stämme Bacillus aizawai, Bacillus cereus, Bacillus firmus, Bacillus kurstaki, Bacillus lentimorbus, Bacillus licheniformis, Bacillus megaterium, Bacillus popillae, Bacillus pumilus, Bacillus sphaericus, Bacillus subtilis und Bacillus thuringiensis. Zusätzlich zu den Bakterien wird ein organisches Lösungsmittel eingesetzt.

Aus US 6,245,551 B1 ist ein neues Antibiotika erzeugendes Bakterium bekannt, das die Eigenschaften eines näher bezeichneten Bacillus pumilus enthält.

Aus US 5,665,354 ist ein Bakterienstamm Bacillus licheniformis bekannt.

Aus WO 2006/032530 A1 ist eine Zusammensetzung bekannt, die antagonistische Mikroorganismen und Salze enthält, um als Biopestizid eingesetzt zu werden.

Der Erfindung liegt die Aufgabe zugrunde, ein Verfahren zur Aufzucht der Nutztiere bereitzustellen, das den Befall der Tiere mit pathogenen Bakterien reduziert.

Erfindungsgemäß wird die Aufgabedurch ein Verfahren mit den Merkmalen aus Anspruch 1 gelöst.

Die erfindungsgemäße Aufgabe wird durch ein Verfahren zum Reduzieren von pathogenen Bakterien in einem Stall für Nutztiere gelöst. Das Verfahren weist einen Schritt auf, eine Mischung von Bakterien der Stämme Bacillus subtilis, Bacillus licheniformis und Bacillus pumilus in den Stall auszubringen. Durch das Ausbringen der Mischung von Bakterien in dem Stall wird die im Stall vorhandene Biomasse besiedelt und die Konzentration an pathogenen Bakterien im Stall reduziert. Der Erfindung liegt die Erkenntnis zugrunde, dass das Ausbringen von Bakterien in dem Stall zu einer Reduzierung von pathogenen Bakterien in dem Stall führt. Mit Stall wird nachfolgend eine Einrichtung bezeichnet, die zur Unterbringung von Nutztieren geeignet ist. Die ausgebrachte Mischung von Bakterien besiedelt die im Stall vorhandene Biomasse, bestehend aus Streu, Futterresten, Kot und Urin der Tiere sowie weiteren organischen Materialien. Als Nutztiere werden Tiere bezeichnet, deren Produkte und/oder deren Körper zur Lebensmittelgewinnung oder sonstige Zwecke für menschliche Belange genutzt werden. Durch Besiedelung der Biomasse mit der Mischung von Bakterien wird den pathogenen Bakterien die Grundlage entzogen, so dass die pathogenen Bakterien in deutlich geringeren Konzentrationen im Stall auftreten und in geringer Menge von den Tieren aufgenommen werden können. Darüber hinaus reduziert die ausgebrachte Mischung von Bakterien die Produktion von Schadgasen, die durch Bakterien bei der Zersetzung von organischer Masse zumeist in Form von Ammoniak produziert werden. Das erfindungsgemäße Verfahren bewirkt somit zusätzlich eine Reduzierung der Umweltbelastung durch Schadgase. Die erfindungsgemäß eingesetzten Bakterien bilden ebenfalls Proteasen zum Proteinabbau, lassen dabei aber kein oder weniger Ammoniak entstehen.

In einer möglichen Ausgestaltung wird eine Mischung von Bakterien vor dem Ausbringen mit einem flüssigen Trägermedium gemischt. Bevorzugt weist das flüssige Trägermedium Wasser auf, das unproblematisch im Stall versprüht werden kann.

Alternativ kann bei dem erfindungsgemäßen Verfahren das Ausbringen der Mischung von Bakterien auch auf einem festen Trägermedium erfolgen. Dabei liegen die Bakterien in versporter Form an und/oder in dem Trägermedium vor. Das feste Trägermedium kann einen organischen Träger, beispielsweise Zichorienwurzel, Maiskolben oder Maisspindelmehl Corncob und/oder Weizengrießkleie aufweisen. Auch kann als ein festes Trägermedium ein anorganischer Träger, beispielsweise Siliziumoxid, Kieselgur und/oder Tonmineralien vorgesehen sein. Bei der Verwendung von festen Trägermedien werden Bakterien überwiegend oder vollständig in versporter Form in dem Stall ausgebracht. Durch den Kontakt mit Flüssigkeit und/oder Wärme werden die Bakterien dann aktiviert und entfalten ihre Wirkung. Durch die Verwendung eines festen Trägermediums an oder in dem die Bakterien zunächst in versporter Form vorliegen, ist eine Bevorratung der Bakterien in dem Stall möglich, derart, dass diese erst bei Bedarf durch auftretende Feuchtigkeit aktiviert werden.

Bei dem erfindungsgemäßen Verfahren erfolgt das Ausbringen der Mischung von Bakterien je nach Alter und/oder Art der Nutztiere in einer vorbestimmten Anzahl von KBE (koloniebildende Einheiten) der Bakterien. Ferner sieht das erfindungsgemäße Verfahren vor, dass das Ausbringen der Mischung von Bakterien nach einem vorbestimmten Zeitplan wiederholt wird. Der Zeitplan kann dabei berücksichtigen, dass die Tiere im Laufe der Zeit an Gewicht zunehmen und somit auch die Menge an Kot und Urin mit der Zeit zunimmt.

In einer besonderen Ausgestaltung des erfindungsgemäßen Verfahrens hat sich bei der Anwendung bei Geflügel als vorteilhaft herausgestellt, das Einbringen der Mischung von Bakterien im Wochenabstand zu wiederholen. Dabei werden 0,5 x 10⁹ bis 4 x 10⁹ KBE pro Tier in dem Stall ausgebracht. Bei der Aufzucht von Schweinen und Sauen hat sich die tägliche Ausbringung der Mischung von Bakterien als vorteilhaft erwiesen, hierbei werden 0,1 x 10⁹ bis 4 x 10⁹ KBE pro Tier in dem Stall ausgebracht.

Ein Einsatz von 0,5 x 10⁹ KBE pro Tier bis 3 x 10⁹ pro Tier im Liegebereich von Milchkühen bringt positive Effekte für die Eutergesundheit und kann den Gehalt an somatischen Zellen in der Milch merklich absenken.

Die vorstehende Erfindung wird nachfolgend anhand von drei Beispielen näher erläutert:

### Beispiel 1:

Bei der Aufzucht von Puten erfolgt in einem ersten Schritt eine Desinfektion und Reinigung des Stalls. In einem zweiten Schritt wird herkömmliches Streumaterial in dem Stall ausgebracht. Unmittelbar vor oder mit dem Einsetzen der Küken in den Stall wird eine Bakterienmischung in der Konzentration von 1 x 10⁹ KBE pro Vogel in dem Stall versprüht. Hierzu wird die Mischung der Bakterien mit einer ausreichenden Menge von Wasser versetzt, das dann mit einer herkömmlichen Sprüheinrichtung im Stall versprüht werden kann. Die Wassermenge ist abhängig von der Fläche des Stalls so ausgewählt, dass dieser nicht nass wird oder die Mischung der Bakterien gleichmäßig im Stall versprüht werden kann. Am siebten Tag wird dieser Vorgang wiederholt, wobei dann die Konzentration der Bakterien auf 2 x 10⁹ KBE verdoppelt wird. Ebenso erfolgt ein Versprühen am vierzehnten Tag in einer Konzentration von 2 x 10⁹ KBE pro Vogel. In der dritten Woche wird am einundzwanzigsten Tag die Konzentration auf 2,5 x 10⁹ KBE pro Vogel erhöht und das Gemisch durch die Beigabe von Wasser gleichmäßig im Stall versprüht. Die Konzentration von 2,5 x 10⁹ KBE pro Vogel wird dann für 8 bis 12 Wochen beibehalten. Mit Abnahme der maternalen Immunität nach 2 Wochen steigt in herkömmlichen Herden das Risiko einer Kokzidiose rapide an. Die Kokzidien haben einen 7-tägigen Zyklus. Das größte Infektionsrisiko besteht zwischen der dritten und achten Woche. Der erfindungsgemäße Einsatz der Bakterien hat in dieser Zeit von der dritten bis zur achten Woche eine merkliche Abschwächung der Oozysten und der Kokzidien bewirkt, so dass ein Infektionsrisiko mit Kokzidiose reduziert werden konnte. Nach der 8. Lebenswoche sind die Puten in der Regel so gestärkt, dass sie eine Neuinfektion mit Kokzidiose selbst abwehren können. Darüber hinaus tritt mit dem erfindungsgemäßen Verfahren eine deutlich geringere Geruchsbildung im Stall auf. Insgesamt kann mit dem erfindungsgemäßen Verfahren ein deutlich höheres Schlachtgewicht der Tiere bei ansonsten gleicher Haltung erzielt werden.

### Beispiel 2:

Bei der Schweinemast wird in einem ersten Schritt der Stall desinfiziert und gereinigt. Vorher oder nach dem Einbringen der Ferkel wird eine mit Wasser versetzte Mischung der Bakterien in einer Menge von 0,5 x 10⁹ KBE pro Schwein in den Stall eingebracht. Dieser Vorgang wird in den ersten 19 Tagen täglich wiederholt. Beginnend mit Tag 20 wird bis zum Tag 39 täglich eine Mischung von Bakterien mit 1 x 10⁹ KBE pro Tier in dem Stall versprüht. In der abschließenden Phase von Tag 40 bis Tag 89 werden 1,5 x 10⁹ KBE pro Tier im Stall versprüht. Bei Mastställen, die mit einem Güllekeller ausgestattet sind; wird die Mischung der Bakterien entweder auf dem Spaltenboden oder direkt in dem Güllekeller ausgebracht. In dem Maststall kann durch eine Vernebelungsanlage, beispielsweise an der Stalldecke, vorgesehen sein, über die dann die Mischung der Bakterien in dem Stall versprüht werden kann. Ist bereits eine Berieselungsanlage vorhanden, beispielsweise zur Reinigung des Stalls nach dem Mastdurchgang, so kann diese auch während der Mast zum Versprühen der Bakterien eingesetzt werden.

Bei der Schweinemast kann ebenfalls festgestellt werden, dass die Gewichtszunahme der Tiere durch das erfindungsgemäße Verfahren verbessert wird. Darüber hinaus wirkt sich auch die Reduzierung von Schadgasen in dem Stall positiv auf die Gesundheit der Tiere aus.

### Beispiel 3:

Bei der Haltung von Sauen erfolgt in einem ersten Schritt ebenfalls die Desinfektion und eine Reinigung des Stalls. In einem zweiten Schritt wird Streu im Stall für die Sauen und vor allem für die neugeborenen Ferkel ausgebracht. Zur Reduzierung von pathogenen Keimen in dem Stall werden täglich 2 x 10⁹ KBE pro Sau in dem Stall versprüht. Dabei erfolgt ein Versprühen bevorzugt im Bereich der Sau und insbesondere in dem Bereich, in dem die Sau ihre Exkremente absetzt. In dem oder den Ferkelnestern erfolgt die Ausbringung der Mischung von Bakterien dagegen bevorzugt mit einem festen Trägermedium. Zur Arbeitserleichterung kann auch ein Versprühen in dem gesamten Stall erfolgen, wobei auch wieder eine Vernebelungs- /Berieselungsanlage eingesetzt werden kann.

Bei der Anwendung des erfindungsgemäßen Verfahrens konnte festgestellt werden, dass die Sauen einen deutlich besseren Gesundheitszustand besitzen, als wenn auf das erfindungsgemäße Verfahren verzichtet wird. Das Auftreten von Infektionskrankheiten jeglicher Art konnte bei den Ferkeln merklich reduziert werden.

Bei der Haltung von Schweinen und Rindern, aber auch bei Geflügel besteht neben dem oben beschriebenen Versprühen der Bakterien auch die Möglichkeit, ein festes Trägermedium einzusetzen. Dieses besitzt den Vorteil, dass die versport vorliegenden Bakterien durch von den Tieren eingebrachte Flüssigkeit, wie beispielsweise Kot und Urin oder ausgelaufene Milch bei Kühen, oder durch die Wärme der Tiere aktiviert werden. Hierdurch kann lokalisiert dort Biomasse mit den Bakterien aus der Mischung kolonisiert werden, so dass gerade in den Bereichen, in denen sich ansonsten pathogene Bakterien vermehren, die erfindungsgemäßen Bakterien ausbreiten. Bei Einsatz eines festen Trägermediums ist es möglich, dieses nicht gleichmäßig im gesamten Stall auszubringen, sondern beispielsweise bevorzugt an oder in den Ruheplätzen der Tiere.

## Patentansprüche

1. Verfahren zum Reduzieren von pathogenen Bakterien in einem Stall für Nutztiere, **gekennzeichnet durch** Ausbringen einer Mischung von Bakterien der Stämme Bacillus subtilis, Bacillus licheniformis und Bacillus pumilus in dem Stall.

2. Verfahren nach Anspruch 1, **dadurch gekennzeichnet, dass** vor dem Ausbringen die Mischung von Bakterien mit einem flüssigen Trägermedium gemischt wird.

3. Verfahren nach Anspruch 2, **dadurch gekennzeichnet, dass** das flüssige Trägermedium Wasser aufweist.

4. Verfahren nach Anspruch 2 oder 3, **dadurch gekennzeichnet, dass** das flüssige Trägermedium mit der Mischung von Bakterien im Stall versprüht wird.

5. Verfahren nach Anspruch 1, **dadurch gekennzeichnet, dass** vor dem Ausbringen die Mischung von Bakterien auf ein festes Trägermedium aufgebracht wird und die Bakterien in versporter Form an und/oder in dem Trägermedium vorliegen.

6. Verfahren nach Anspruch 5, **dadurch gekennzeichnet, dass** das feste Trägermedium einen organischen Träger aufweist.

7. Verfahren nach Anspruch 6, **dadurch gekennzeichnet, dass** der organische Träger Zichorienwurzel, Maiskolben und/oder Weizengrießkleie aufweist.

8. Verfahren nach Anspruch 5, **dadurch gekennzeichnet, dass** das feste Trägermedium einen anorganischen Träger aufweist.

9. Verfahren nach Anspruch 8, **dadurch gekennzeichnet, dass** der anorganische Träger Siliziumoxid, Kieselgur und/oder Tonmineralien aufweist.

10. Verfahren nach einem der Ansprüche 1 bis 9, **dadurch gekennzeichnet, dass** je nach Alter und/oder Art der Nutztiere in dem Stall die Anzahl der koloniebildenden Einheiten (KBE) der Bakterien bestimmt wird.

11. Verfahren nach Anspruch 10, **dadurch gekennzeichnet, dass** das Ausbringen der Mischung von Bakterien nach einem vorbestimmten Zeitplan wiederholt wird.

12. Verfahren nach Anspruch 10 oder 11, **dadurch gekennzeichnet, dass** für Geflügel im Wochenabstand 0,5 x 10⁹ KBE bis 4 x 10⁹ KBE pro Tier ausgebracht werden.

13. Verfahren nach Anspruch 10 oder 11, **dadurch gekennzeichnet, dass** für Schweine, Sauen und Rinder täglich 0,1 x 10⁹ KBE bis 3 x 10⁹ KBE pro Tier ausgebracht werden.
